# DEMANDE DE BREVET EUROPEEN

(11) **EP 4 574 511 A1**
(43) Date de publication de la demande: **25.06.2025**
(21) Numéro de dépôt: 24222001.0
(22) Date de dépôt: 20.12.2024
(51) Int. Cl.: B60K 35/22, B60K 35/23, B60K 35/231, B60K 35/233, B60K 35/29, G06F 3/14, G09G 5/14

(54) **PROCÉDÉ D'AFFICHAGE POUR UN SYSTÈME ÉLECTRONIQUE D'AFFICHAGE DESTINÉ À ÊTRE INTÉGRÉ DANS UN COCKPIT D'UN AÉRONEF, PRODUIT PROGRAMME D'ORDINATEUR ET MODULE D'ARRANGEMENT ASSOCIÉS**

(30) Priorité: 22.12.2023 FR 2315106
(71) Demandeur: THALES, 92190 Meudon (FR)
(72) Inventeur: CHABOT, Philippe, 33160 SAINT AUBIN DE MEDOC (FR); FILLIATRE, Eric, 33700 CS50108 MERIGNAC (FR); FINE, Alexandre, 33700 MERIGNAC (FR)
(74) Mandataire: Lavoix

(57) **Abrégé**

La présente invention a pour objet un procédé d'affichage pour un système électronique d'affichage destiné à être intégré dans un cockpit d'un aéronef, le procédé étant mis en oeuvre par un module d'arrangement propre à être connecté à un ensemble de calculateurs graphiques et à un ensemble d'afficheurs. Chaque afficheur définit au moins une surface d'affichage.

Le procédé comprend une étape de réception (110), depuis chaque calculateur graphique, d'au moins un flux calculé. Le procédé comprend une étape de génération (120), pour chaque flux calculé reçu, d'au moins un calque d'interface Homme-Système. Le procédé comprend, pour chaque afficheur ou pour chaque surface d'affichage, une étape de formation (130) d'un flux vidéo distribué à partir des calques d'interface Homme-Système.

Le procédé comprend une étape d'envoi (140), à l'ensemble d'afficheurs, des flux vidéo distribués comprenant les calques d'interface Homme-Système, en vue de leur affichage sur chaque afficheur ou chaque surface d'affichage.

## Description

La présente invention concerne un système électronique d'affichage destiné à être intégré dans un cockpit d'un aéronef.

La présente invention concerne le domaine des systèmes d'affichage dans les aéronefs.

Il est connu dans les aéronefs que le cockpit comprenne un système électronique d'affichage comprenant : des afficheurs pour fournir de l'information au pilote, et des calculateurs graphiques.

Différents types d'afficheurs sont généralement présents dans les cockpits : les afficheurs tête basse, le ou les afficheurs tête haute, aussi appelés afficheurs HUD (de l'anglais Heads Up Display) comprenant les solutions de projection sur pare-brise, et éventuellement des afficheurs compris dans les casques des pilotes, aussi appelés afficheurs HWD (de l'anglais Head Worn Display).

Il est connu que les afficheurs tête basse soient des écrans d'affichage, positionnés dans une partie inférieure du cockpit relativement au(x) afficheur(s) tête haute.

Le ou les afficheurs tête haute ainsi que les afficheurs compris dans les casques comprennent généralement des surfaces au moins partiellement transparentes positionnées entre le pilote et une vitre du cockpit, et sur lequel un flux vidéo est projeté. Une projection directement sur le pare-brise est aussi possible. Ainsi, le pilote observe la superposition de l'environnement externe de l'aéronef, via une vitre du cockpit, et du flux vidéo projeté sur la surface.

Il est connu que le dispositif d'affichage comprenne, pour chaque afficheur, une ou des sources vidéo issues d'un ou plusieurs calculateurs respectifs propres à déterminer le flux vidéo à afficher sur l'afficheur.

Cependant, une telle architecture du système électronique d'affichage est sensiblement rigide puisque le contenu affiché sur chaque afficheur dépend uniquement du calculateur associé.

La présente invention a pour objet un procédé d'affichage pour un système électronique d'affichage destiné à être intégré dans un cockpit d'un aéronef, le procédé étant mis en oeuvre par un module d'arrangement propre à être connecté à un ensemble de calculateurs graphiques et à un ensemble d'afficheurs, chaque afficheur définissant au moins une surface d'affichage ;
le procédé comprenant les étapes suivantes :
- réception, depuis chaque calculateur graphique, d'au moins un flux calculé,
- génération, pour chaque flux calculé reçu, d'au moins un calque d'interface Homme-Système,
- pour chaque afficheur ou pour chaque surface d'affichage, formation d'un flux vidéo distribué à partir des calques d'interface Homme-Système,
- envoi, à l'ensemble d'afficheurs, des flux vidéo distribués comprenant les calques d'interface Homme-Système, en vue de leur affichage sur chaque afficheur ou chaque surface d'affichage.

Selon des modes de réalisation particuliers de l'invention, le procédé d'affichage comprend une ou plusieurs des caractéristiques suivantes, prises isolément, ou suivant toutes les combinaisons techniquement possibles.
- lors de l'étape de formation, au moins un flux vidéo distribué comprend des calques d'interface Homme-Système générés à partir de flux calculés issus de plusieurs calculateurs graphiques distincts ;
- lors de l'étape de formation, au moins deux flux vidéo distribués distincts sont formés en divisant un calque d'interface Homme-Système géométriquement, chacun desdits deux flux vidéo distribués comprenant une portion du calque d'interface Homme-Système issue de la division ;
- le procédé comprend en outre comprenant en outre, les étapes suivantes :
   ∘ réception d'une instruction de modification de l'affichage d'un flux vidéo distribué, émise depuis un utilisateur du système d'affichage,
   ∘ formation d'un nouveau flux vidéo distribué à la place du flux vidéo distribué ciblé par l'instruction, en fonction de l'instruction reçue, et
   ∘ envoi, à l'afficheur correspondant, ou à la surface d'affichage correspondante du nouveau flux vidéo distribué en vue de son affichage sur l'afficheur ou la surface d'affichage ;
- l'instruction de modification est choisie parmi :
   ∘ une instruction de déplacement d'un calque d'interface Homme-Système dans un flux vidéo distribué,
   ∘ une instruction d'agrandissement ou de rétrécissement de l'affichage d'un calque d'interface Homme-Système dans un flux vidéo, et
   ∘ une instruction de suppression de calque d'interface Homme Système dans un flux vidéo distribué ;
- lors de l'étape de génération, à chaque calque d'interface Homme-Système est associé au moins un attribut indiquant le calculateur graphique d'où est issu le flux calculé à partir duquel le calque d'interface Homme-Système est généré, lors de l'étape de formation, chaque flux vidéo distribué est formé en fonction de règles prédéterminées dépendant du calculateur graphique indiqué dans chaque attribut de chaque calque d'interface Homme-Système ;
- l'ensemble de calculateurs comprend des calculateurs critiques et des calculateurs non-critiques, les règles prédéterminées étant fonction de la criticité des calculateurs ;
- le procédé comprend en parallèle de ces étapes, une phase de surveillance, au cours de laquelle l'exécution de chaque étape est surveillée par un module de surveillance,
   en cas de détection d'un dysfonctionnement par le module de surveillance, le module de surveillance commandant au moins une action parmi les actions suivantes:
   ∘ affichage d'un message d'avertissement sur l'un des afficheurs,
   ∘ reconfiguration d'une distribution des calques d'interface Homme-Système dans les flux distribués, et
   ∘ inhibition du flux calculé par un des calculateurs ; et
- lors de l'étape de formation (130), au moins un flux vidéo distribué formé comprend plusieurs calques d'interface Homme-Machine (56).

La présente invention a également pour objet un produit programme d'ordinateur comprenant des instructions logicielles qui, lorsqu'elles sont exécutées par une ordinateur, mettent en oeuvre un tel procédé.

La présente invention a également pour objet un module d'arrangement pour un système électronique d'affichage destiné à être intégré dans un cockpit d'un aéronef,
le module d'arrangement étant propre à être connecté à un ensemble de calculateurs graphiques et à un ensemble d'afficheurs, chaque afficheur définissant au moins une surface d'affichage ;
le module d'arrangement comprenant au moins une unité de génération configuré pour recevoir depuis, chaque calculateur graphique, un flux calculé et pour générer au moins un calque d'interface Homme-Système à partir de ce flux calculé,
le module d'arrangement comprenant en outre une unité de fusion et distribution configurée pour former, pour chaque afficheur ou pour chaque surface d'affichage, un flux vidéo distribué à partir des calques d'interface Homme-Système,
l'unité de fusion-distribution étant en outre configuré pour envoyer, à l'ensemble d'afficheurs, les flux vidéo distribués formés en vue de leur affichage sur chaque afficheur ou chaque surface d'affichage.

D'autres caractéristiques et avantages de l'invention apparaîtront à la lecture de la description qui suit de modes de réalisation de l'invention, donnés à titre d'exemple uniquement et en référence aux dessins qui sont :
- [Fig 1] la figure 1 est une représentation schématique d'un cockpit d'un aéronef comprenant un système électronique d'affichage selon l'invention ;
- [Fig. 2] la figure 2 est une représentation schématique d'un ensemble d'afficheur(s) compris dans le système électronique d'affichage selon l'invention ;
- [Fig. 3] la figure 3 est une représentation schématique du système électronique d'affichage selon l'invention ;
- [Fig. 4] la figure 4 est une représentation schématique de l'ensemble d'afficheur(s) de la figure 2 présentant un exemple de distribution d'affichage de flux vidéo ;
- [Fig. 5] la figure 5 est une représentation schématique détaillée d'un module d'arrangement compris dans le système électronique d'affichage de la figure 3,
- [Fig. 6] la figure 6 est une organigramme d'un procédé d'affichage mis en oeuvre par le système d'affichage selon de la figure 3.

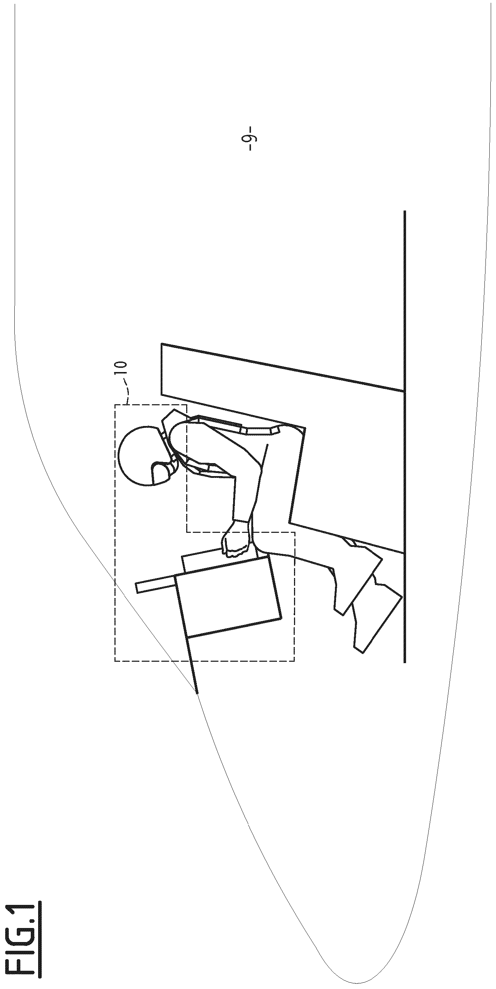

Sur la figure 1 est représenté un cockpit 9 d'un aéronef. Dans le cockpit 9 est installé un système électronique d'affichage 10.

Le système électronique d'affichage 10 comprend un ensemble d'afficheurs 15, un ensemble de calculateurs graphiques 20, un module d'arrangement 25, et optionnellement un ensemble de capteur(s) d'instruction 26 et un module de décision 27.

L'ensemble d'afficheurs 15 comprend préférentiellement au moins un afficheur tête haute 15A, au moins un afficheur tête basse 15B.

Chaque afficheur comprend au moins une dalle d'affichage 30, également appelée dalle 30. On entend par « dalle d'affichage » un module d'affichage comprenant des moyens d'affichage tels que des moyens à cristaux liquides, plasma, LED, microleds ou OLED, et une ressource électronique propre à recevoir des images à afficher et propre à commander les moyens d'affichage pour afficher lesdites images à afficher, et optionnellement un cadre délimitant le contour des moyens d'affichage.

A titre d'exemple, chaque dalle 30 est du type « borderless », aussi appelé à bord extra-fins. Autrement dit, chaque dalle 30 ne comprend aucun cadre, ou alors un cadre dont l'épaisseur est inférieure à 5 mm. Ainsi, le cadre, s'il est présent, n'est pas distinguable pour un pilote dans le cockpit 9.

Les dalles d'affichage 30 de chaque afficheur 15A, 15B définissent au moins une surface d'affichage 32. Au moins une surface d'affichage 32 est formée par plusieurs dalles 30 contigües.

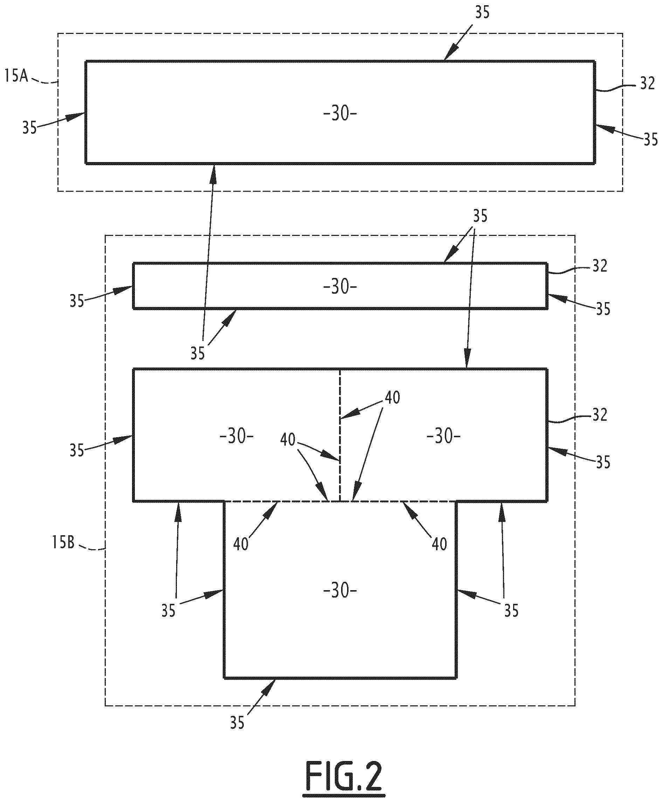

En référence à la figure 2, une telle surface est définie par les dalles d'affichage 30 les plus en bas de l'afficheur tête basse le plus bas.

Dans l'exemple de la figure 2, l'ensemble d'afficheurs 15 comprend un afficheur tête haute 15A et un afficheur tête basse 15B. L'afficheur tête haute 15A comprend une unique dalle d'affichage 30 définissant une unique surface d'affichage 32. L'afficheur tête basse 15B comprend quatre dalles d'affichage 30 définissant deux surfaces d'affichage distinctes.

Comme visible sur la figure 2, chaque dalle d'affichage 30 a préférentiellement une forme sensiblement rectangulaire, s'étendant entre des bords. Les bords sont par exemple formés par le cadre de la dalle 30 lorsqu'elle comprend un tel cadre. Si la dalle 30 ne comprend pas de cadre, alors les bords sont formés par les extrémités des moyens d'affichage. Selon une variante non-représentée, au moins une des dalles 30 présente une forme non-rectangulaire, telle qu'une forme courbe ou conique, par exemple épousant la forme du cockpit 9.

Les dalles 30 comprennent des bords, ou parties de bord, délimitant un pourtour de l'afficheur correspondant 15A, 15B. Ces bords sont dits bords externes 35. Les bords externes 35 sont représentés en trait plein sur la figure 2.

Au moins deux dalles 30 d'un des afficheurs 15A, 15B sont contigües. On entend par « contigües » que les dalles 30 se joignent en au moins un bord, sans faire apparaître d'espace visible entre les dalles 30. Avantageusement, la zone de transition entre chaque couple de dalles 30 contigües d'un même afficheur 15A, 15B est sensiblement plate et dépourvue de rugosité.

Les dalles 30 contigües comprennent au moins un bord, ou partie de bord, contigu l'un de l'autre, dit bord contigu 40.

Sur la figure 2, seul l'afficheur tête basse 15B comprend de telles dalles 30 contigües. Il est clair qu'une telle configuration est également possible pour l'afficheur tête haute 15A.

Dans l'exemple de la figure 2, les bords contigus 40 sont représentés par un trait en tirets. Les dalles contigües 30 sont telles que, lorsque le système électronique d'affichage est intégré au cockpit 9 d'un aéronef, les bords contigus 40 des dalles contigües sont indistingables pour un pilote de l'aéronef.

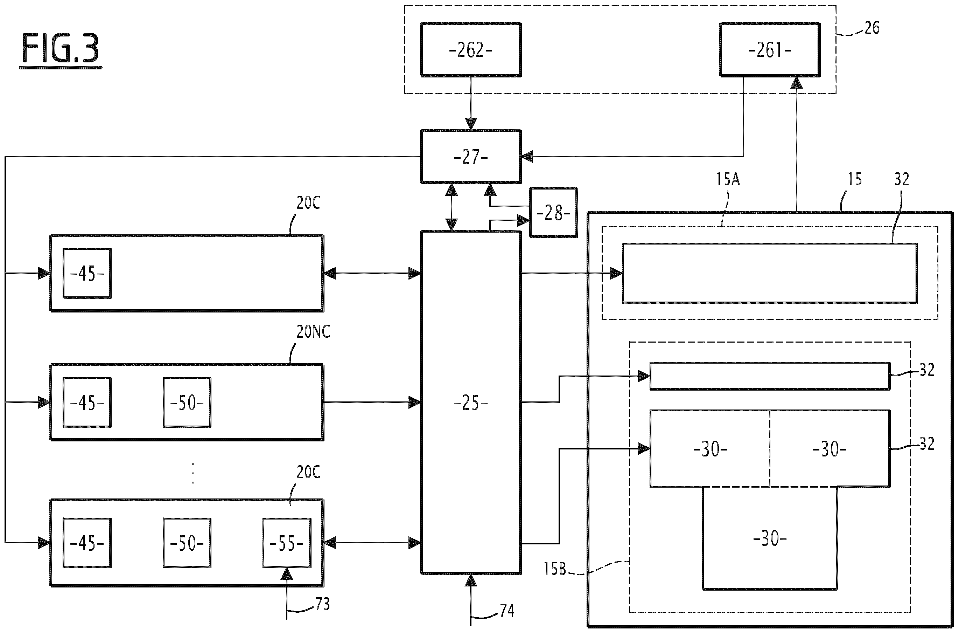

En référence à la figure 3, les calculateurs graphiques 20 sont chacun propres à calculer un flux calculé. Le flux calculé est l'un parmi : un flux vidéo, un flux de commandes graphiques, ou un flux de commandes aéronautiques, à afficher sur l'ensemble d'afficheurs 15. Chaque flux calculé comprend un contenu informationnel à afficher.

Le ou les flux vidéo sont préférentiellement conformes à tout protocole vidéo implémentant un niveau de service requis par le flux. Ainsi, chaque flux présente des caractéristiques conforme à un critère prédéfini en terme d'intégrité, de disponibilité en fonction des agressions en environnement aéronautique et de débit.

Par exemple, le ou les flux vidéo sont conformes au protocole ARINC 818, au protocole DVI ou au protocole SMPTE. Chaque flux vidéo comprend préférentiellement des sous-images 37 rafraichis périodiquement.

Le ou les flux de commandes graphiques sont par exemple des flux de commandes dans un langage graphique, tel que le langage OpenGL, Vulkan, ou tout autre API graphique.

Le ou les flux de commandes aéronautiques sont des flux de commande respectant de préférence le protocole ARINC 661.

Par exemple et comme représenté sur la figure 3, le système électronique d'affichage 10 comprend au moins un calculateur graphique 20 propre à calculer un flux vidéo conforme au protocole ARINC 818, au moins un calculateur graphique 20 propre à calculer des commandes aéronautiques conformes au protocole ARINC 661, et au moins un calculateur graphique 20 propre à calculer des commandes graphiques dans un langage graphique tel que le langage OpenGL.

Chaque calculateur graphique 20 comprend par exemple une unité de calcul 45 propre à générer des commandes graphiques et/ou des commandes aéronautiques comme décrites précédemment.

Au moins un calculateur graphique 20 comprend en outre une unité graphique 50 connecté à l'unité de calcul 45 et propre à générer un ou plusieurs flux vidéo à partir des commandes graphiques et/ou aéronautiques générées.

Dans l'exemple de la figure 3, deux des trois calculateurs graphiques 20 représentés comprennent une unité graphique respective 50.

Au moins un calculateur graphique 20 comprenant un unité graphique 50 comprend en outre une unité vidéo 55. Préférentiellement, le ou les calculateurs graphiques 50 comprenant une unité vidéo 55 sont connectés à un équipement externe non-représenté. Ledit équipement externe comprend par exemple un ordinateur de vol de l'aéronef ainsi que des bases de données. Ainsi, ledit calculateur graphique 20 est configuré pour recevoir, depuis ce système externe, des informations à représenter dans le(s) flux calculé(s) à afficher sur l'ensemble d'afficheur(s) 15. Les informations à représenter reçues sont par exemple dans un format vidéo conformes au protocole ARINC A818 ou SMTPE. Lesdites informations sont par exemple du contenu symbologique. Chaque flux vidéo comprend par exemple, au moins pour le contenu symbologique, un niveau de transparence, aussi appelé niveau alpha.

Dans ce cas, l'unité vidéo 55 est propre à traiter ces informations et à les combiner avec le flux vidéo issu de l'unité graphique 50 pour former le flux vidéo calculé.

Optionnellement, l'unité vidéo 55 est en outre propre à recevoir un flux vidéo externe 73 et à le combiner avec les autres flux.

Si calculateur graphique 20 comprend uniquement une unité de calcul 45 respective, le flux calculé par ce calculateur 20 est le flux de commandes graphiques ou aéronautiques généré par ladite unité de calcul 45. Ceci est notamment le cas du calculateur représenté en haut sur la figure 3.

Si un calculateur graphique 20 comprend uniquement une unité de calcul 45 et une unité graphique 50 respectives, le flux calculé par ce calculateur 20 est le flux vidéo généré par ladite unité graphique 50 et/ou le flux calculé par l'unité de calcul 45. Ceci est notamment le cas du calculateur 20 représenté au milieu sur la figure 3.

Si un calculateur graphique 20 comprend une unité de calcul 45, une unité graphique 50 et une unité vidéo 55 respectives, le flux calculé par ce calculateur 20 est le flux vidéo issu ladite unité vidéo 55, et/ou le flux calculé par l'unité graphique 50, et/ou le flux calculé par l'unité de calcul 45. Ceci est notamment le cas du calculateur 20 représenté en bas sur la figure 3.

Il est clair que tous ces types de calculateur graphique 20 ne sont pas nécessairement compris dans le système 10. Il est également clair que plusieurs calculateurs graphiques 20 sont susceptibles d'être du même type, i.e. comprenant les mêmes unités 45, 50, 55.

Selon un exemple non-représenté, le système comprend :
- au moins un calculateur graphique 20 comprenant uniquement une unité de calcul 45 et générant un ou plusieurs flux qui lui sont propres.,
- au moins un calculateur graphique 20 comprenant uniquement une unité de calcul 45 et une unité graphique 50 et générant un ou plusieurs flux qui lui sont propres, et
- au moins un calculateur graphique 20 comprenant une unité de calcul 45, une unité graphique 50 et une unité vidéo 55 et générant un ou plusieurs flux qui lui sont propres.

En variante non-représentée, même si un des calculateurs graphiques 20 comprend une unité graphique 50 et éventuellement une unité vidéo 55, il est quand même propre à envoyer un flux calculé comprenant uniquement des commandes graphiques ou aéronautiques issu de l'unité de calcul 45.

En outre, les calculateurs graphiques 20 sont de deux types : les calculateurs graphiques critiques 20C et les calculateurs graphiques non-critiques 20NC.

Chaque calculateur 20C critique est propre à calculer au moins un flux vidéo ou de commande(s) graphique(s)/aéronautique(s) comprenant des informations plus importantes pour mener à bien le vol de l'aéronef que les flux vidéo ou commande(s) graphique(s)/aéronautique(s) calculé(es) par chaque calculateur 20NC non-critique.

Préférentiellement, chaque calculateur critique 20C est propre à recevoir, depuis le module d'arrangement 25 une fréquence de travail dudit module d'arrangement, comme il sera décrit par la suite. Chaque calculateur critique 20C est alors adapté pour envoyer le flux calculé correspondant à la fréquence de travail reçue. Par exemple, les calculateurs non-critiques 20NC sont adaptés pour envoyer le flux calculé correspondant selon une fréquence propre audit calculateur 20NC et indépendante de la fréquence de travail du module d'arrangement 25.

Dans la suite de la description, la référence 20 est indiqué lorsqu'une caractéristique s'applique autant aux calculateurs critiques 20C et non-critiques 20NC. *A contrario,* lorsque la caractéristique s'applique uniquement à un de ces types de calculateur, la référence 20C ou 20NC est choisie.

En outre, indépendamment des aspects critiques ou non-critiques, les calculateurs graphiques 20 sont, selon un mode de réalisation, distincts les uns des autres et sont propres à fournir les flux calculés sous des formats distincts d'un calculateur graphique 20 à un autre.

Le module d'arrangement 25 est connecté à chaque calculateur graphique 20 et à chaque afficheur 15A, 15B ou surface d'affichage 32. Le module d'arrangement 25 est configuré pour former, à partir des flux calculés, un flux vidéo distribué pour chaque afficheur 15A, 15B ou pour chaque surface d'affichage 32. Les flux vidéo distribués sont également appelés flux distribués.

Le ou au moins l'un des flux vidéo distribués comprend des contenus informationnels issus de flux calculés par différents calculateurs graphiques 20.

A cet effet, le module d'arrangement 25 est configuré pour recevoir les flux calculés depuis chaque calculateur graphique 20.

Selon le mode de réalisation dans lequel les calculateurs graphiques 20 sont de types distincts, le module d'arrangement 25 comprend des moyens propres à acquérir les flux calculés selon les différents formats des calculateurs graphiques 20. Par exemple, les formats peuvent être conformes au protocole graphique aéronautique de type ARINC 661, conformes aux APIs (de l'anglais, *Application Programming Interface*) graphique type OpenGL, Vulkan, ou tout autre APl graphique, conforme de tous les standards vidéo (compressée ou non), ou conforme de tout autre type.

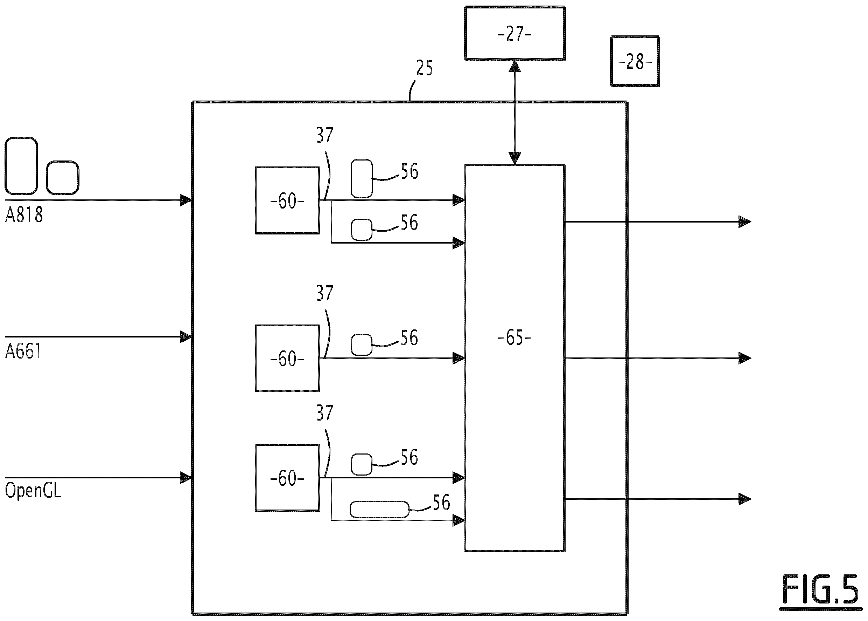

En référence à la figure 5, le module d'arrangement 25 comprend une pluralité d'unités de génération 60. Préférentiellement, le module d'arrangement 25 comprend au moins une unité de génération 60 pour chaque calculateur graphique 20.

Chaque unité de génération 60 est configurée pour recevoir un flux calculé et pour générer à partir de ce flux calculé, au moins un calque d'interface Homme-Système 56, aussi appelé calque d'IHS 56.

On entend par « calque d'IHS » un format de type vidéo comprenant un contenu informationnel à destination de l'utilisateur et préférentiellement avec lequel ledit utilisateur est propre à interagir lorsqu'il est affiché.

Préférentiellement, chaque unité de génération 60 est configurée pour, si le flux calculé reçu est un flux vidéo, séparer les sous-images 37 dudit flux vidéo et générer pour chaque sous-image 37, un calque d'IHS 56 respectif.

Préférentiellement, chaque unité de génération 60 est configurée pour, si le flux calculé reçu est un flux de commandes graphiques ou un flux de commandes aéronautiques, générer un ou plusieurs calques d'IHS 56 à partir de ladite ou desdites commandes contenues dans le flux calculé reçu.

Optionnellement, chaque calque d'IHS 56 comprend au moins un attribut indiquant le calculateur graphique 20 d'où est issu le flux calculé à partir duquel le calque d'IHS 56 est généré. Ainsi, les calques d'IHS 56 issus de calculateur(s) graphique(s) critique(s) 20C sont identifiables.

Préférentiellement, chaque unité de génération 60 associée à un calculateur critique 20C respectif, est propre à envoyer la fréquence de travail audit calculateur critique 20C.

Optionnellement, chaque unité de génération 60 est par exemple propre à associer à chaque calque d'IHS 56, un niveau de transparence.

En particulier, chaque calculateur 20 est configuré pour définir la superposition des futurs calques d'IHS 56 et l'unité de génération 60 est configurée pour en déduire un niveau de transparence de chaque calque d'IHS 56. Alternativement, le niveau de transparence est déterminé par l'unité de génération 60 en fonction de règles prédéterminées définissant un mélange et une superposition des calques d'IHS 56 dans les flux distribués, comme décrit ci-après. Par exemple, dans un calque d'IHS 56 destiné à être placé en dessous d'un autre, une couleur de fond est détectée et un niveau de transparence est associé aux pixels de cette couleur pour pouvoir être recouvert par un autre calque d'IHS 56. Par exemple, un filtrage additionnel est réalisé sur les pixels des deux calques d'IHS 56 pour assurer une transition de couleurs permettant une bonne visibilité de chaque calques d'IHS 56 dans le flux distribué.

Le module d'arrangement 25 comprend en outre une unité de fusion et distribution 65.

L'unité de fusion et distribution 65 est configurée pour recevoir chaque calque d'IHS 56 généré par les unités de génération 60.

L'unité de fusion et distribution 65 est configurée pour distribuer les calques d'IHS 56 parmi les afficheurs 15A, 15B ou parmi les surface d'affichage 32 en formant les flux vidéo distribués. L'unité de fusion et distribution 65 est alors configurée pour former un flux vidéo par afficheur 15A, 15B ou par surface d'affichage 32. Chaque flux vidéo distribué comprend tout ou partie d'un ou plusieurs calques d'IHS 56, éventuellement traités.

Préférentiellement, au moins un flux vidéo distribué comprend plusieurs calques d'interface Homme-Machine 56.

Par exemple, un flux distribué comprend des calques d'IHS 56 générés à partir de flux calculés issus de plusieurs calculateurs graphiques 20 distincts.

L'unité de fusion distribution 65 est par exemple en outre configurée pour former chaque flux distribué de manière à ce qu'il soit adapté à l'afficheur 15A, 15B, ou à la surface d'affichage 32 sur lequel/laquelle il est destiné à être affiché. Par exemple, si l'afficheur tête haute 15A est une surface transparente sur lequel sont projetés des flux vidéo, le module d'arrangement 25 est configuré pour adapter le flux distribué à afficher sur ledit afficheur tête haute 15A, de sorte à ce que le flux projeté soit conforme au monde réel pour le pilote de l'aéronef. On entend par « conforme au monde réel » le fait qu'un objet graphique appartenant au flux distribué soit perçu comme superposé à l'objet réel correspondant. Par exemple, si le flux distribué considéré est un pointeur relatif à la position d'un bâtiment, ledit flux distribué doit superposer le pointeur et le bâtiment réel visé. Par exemple également, si le flux vidéo distribué est la ligne d'horizon, ladite ligne se superpose à l'horizon réel.

En outre, l'unité de fusion et distribution 65 est configurée pour distribuer les calques d'IHS 56 dans les flux distribués de manière à ce qu'il n'y ait pas de contradiction entre les afficheurs tête-haute 15A et tête-basse 15B.

En complément facultatif, l'unité de fusion et distribution 65 est propre à former chaque flux distribué en appliquant des règles prédéterminées, aussi appelées règles prédéfinies, dépendant du calculateur graphique 20 indiqué dans chaque attribut de chaque calque d'IHS 56.

Préférentiellement, le module d'arrangement 25 est propre à recevoir ces règles prédéterminées depuis le module de décision 27, aussi appelé windows manager 27, comme décrit ci-après. Par exemple, les règles prédéterminées sont sélectionnées par le module de décision 27 de manière statique.

Par exemple, les règles prédéterminées définissent, en fonction du calculateur graphique 20 d'où provient le flux vidéo, les traitements à appliquer sur les calques d'IHS 56 générés, et les afficheurs 15A, 15B, ou surface(s) d'affichage 32 lequel/laquelle les flux distribués formés à partir desdits calques 56 doivent être affichés.

Par exemple, les règles prédéterminées définissent la position de chaque calque d'IHS 56 lorsqu'il sera affiché sur l'afficheur, ainsi que la superposition des calques d'IHS 56.

Par exemple, les règles prédéterminées sont telles que le module d'arrangement 25, et en particulier l'unité de distribution 65, préserve l'intégrité, la priorité et la visibilité des calques d'IHS 56 issus de flux calculés par les calculateurs graphiques critiques 20C. Autrement dit, à partir du ou des attributs présents dans les calques d'IHS 56, le module d'arrangement 25 assure que les calques d'IHS 56 issus des calculateurs critiques 20C soient toujours les calques supérieurs en cas de superposition et que les informations qu'ils contiennent soient toujours accessibles dans les flux distribués formés. A cet effet, les règles prédéterminées sont telles qu'un niveau de priorité est associé à chaque calque d'IHS 56 en fonction du calculateur 20C, 20NC dont il provient.

Le module d'arrangement 25, et en particulier l'unité de fusion et distribution 65, est préférentiellement agnostique de la composition de chaque afficheur 15A, 15B et des surfaces d'affichage 32. Autrement dit, pour la distribution des calques d'IHS 56 dans les flux distribués, le module d'arrangement 25 a préférentiellement uniquement connaissance des dimensions de l'afficheur 15A, 15B, ou de la surface d'affichage 32, par exemple en termes de pixels, et de leur géométrie. Le module d'arrangement 25, et les calculateurs 20 sont alors ignorants du nombre de dalles 30 composant chaque afficheur 15A, 15B et/ou surface d'affichage 32 et des limites de chaque dalle 30.

En complément facultatif, le module d'arrangement 25, par exemple via son unité de fusion et distribution 65, est configuré pour afficher, de manière superposée, sur une même zone des dalles 30, plusieurs calques d'IHS 56 issus de flux calculés distincts. A cet effet, l'unité de fusion et distribution 65 est notamment configurée pour utiliser le niveau de transparence des calques d'IHS 56 lors de la formation du flux distribué et configurée pour utiliser des lois de mélange à appliquer sur les calques d'IHS 56 à superposer totalement ou partiellement. Ainsi, selon ce complément facultatif, au moins deux calques d'IHS 56 sont partiellement superposés sur l'ensemble d'afficheurs 15. Préférentiellement, l'unité de fusion et distribution 65 est configuré pour superposer d'abord les calques d'IHS 56 de priorité les plus basses (issus de calculateur non-critique), puis les calques d'IHS 56 de priorité les plus hautes (issus de calculateurs critiques), pour préserver leur intégrité.

Le module d'arrangement 25 est par exemple agnostique des bords contigus 40 des dalles 30. Ainsi, le module d'arrangement 25 est par exemple configuré pour distribuer l'affichage d'au moins un flux distribué réparti entre plusieurs dalles 30. Autrement dit, le module d'arrangement 25 est par exemple configuré pour distribuer l'affichage des flux distribués de sorte qu'un calque d'IHS 56 compris dans un flux distribué soit partiellement affiché sur une première dalle d'affichage 30 de l'ensemble d'afficheurs 15 et partiellement affiché sur une deuxième dalle d'affichage 30 de l'ensemble d'afficheurs 15, la première et la deuxième dalles d'affichage 30 étant contigües.

Optionnellement, le module d'arrangement 25 est configuré pour, lors de la formation des flux distribués, diviser un calque d'IHS 56 géométriquement. Chacun desdits flux vidéo distribués est alors destiné à être affiché sur un afficheur 15A, 15B distinct ou sur une surface d'affichage 32 distincte. Préférentiellement, le module d'arrangement 25 est configuré pour garantir, dans la distribution desdits flux distribués, une continuité entre les afficheurs 15A, 15B et surfaces d'affichage 32. A titre d'exemple, le module d'arrangement 25 est configuré pour distribuer lesdits flux distribués de sorte à aligner l'affichage du ou des calques d'IHS 56 divisés entre l'afficheur tête haute 15A et l'afficheur tête basse 15B.

Selon une variante non-représentée, le module d'arrangement 25 comprend en outre une sortie destinée à être connectée à un enregistreur non-représenté et compris dans le système 10. Selon cette variante, le module d'arrangement 25 est configuré pour envoyer, audit enregistreur, des flux vidéo distribués pour un post-traitement ultérieur. Optionnellement, la copie est sous un autre format que celui des flux vidéo distribués. Par exemple, la copie est compressée, redimensionnée ou composée. Par exemple la copie est propre à être envoyée à l'enregistreur par un câble Ethernet.

En complément facultatif, le module d'arrangement 25 est configuré pour, si un flux reçu n'est pas valide, par exemple un signal bruité ou vide dû un câble non-fonctionnel, transmettre au module de décision 27 cette information pour que le module de décision 27 détermine de nouvelles règles prédéfinies à transmettre au module d'arrangement 25.

La fréquence de travail du module d'arrangement 25 a préférentiellement une valeur prenant en compte les latences liées : aux traitements par les unités de génération 60 et par l'unité de fusion et distribution 65, à l'envoie des flux distribués aux afficheurs et à l'affichage par les afficheurs. Aussi, on comprend que le module d'arrangement 25 permet de traiter de manières synchrone les flux calculés issus des calculateurs critiques 20C. Ainsi, un temps entre le calcul des flux calculés issus des calculateurs critiques 20C et leur affichage est minimisé. Ce temps est par exemple inférieur à 1ms.

La fréquence de travail n'étant pas dédiée aux calculateurs non-critiques 20NC, le module d'arrangement 25 est préférentiellement configuré pour traiter les flux calculés de ces calculateurs non-critiques 20NC de manière asynchrone. Optionnellement, le module d'arrangement comprend une unité de conversion de taux d'image (non-représentée), dite unité FRC (de l'anglais *Frame Rate Converter*) propre à traiter de potentiels conflits entre le traitement synchrone et asynchrone des flux calculé. Préférentiellement alors, la fréquence de travail dépend alors en outre de la latence liée à l'unité FRC.

Selon un exemple non-représenté, le système électronique d'affichage 10 comprend plusieurs modules d'arrangement 25. En fonctionnement, chaque calculateur graphique 20 est configuré pour envoyer le(s) flux calculé(s) à un même module d'arrangement 25, dit module maître. Si ledit module maître 25 est indisponible, chaque flux calculé est redirigé vers un autre module d'arrangement 25, qui devient alors le module maître.

De nouveau en référence à la figure 3, chaque afficheur est configuré pour répartir l'affichage du flux distribué associé sur sa dalle d'affichage 30 ou parmi ses dalles d'affichage 30 s'il comprend plusieurs dalles d'affichage 30.

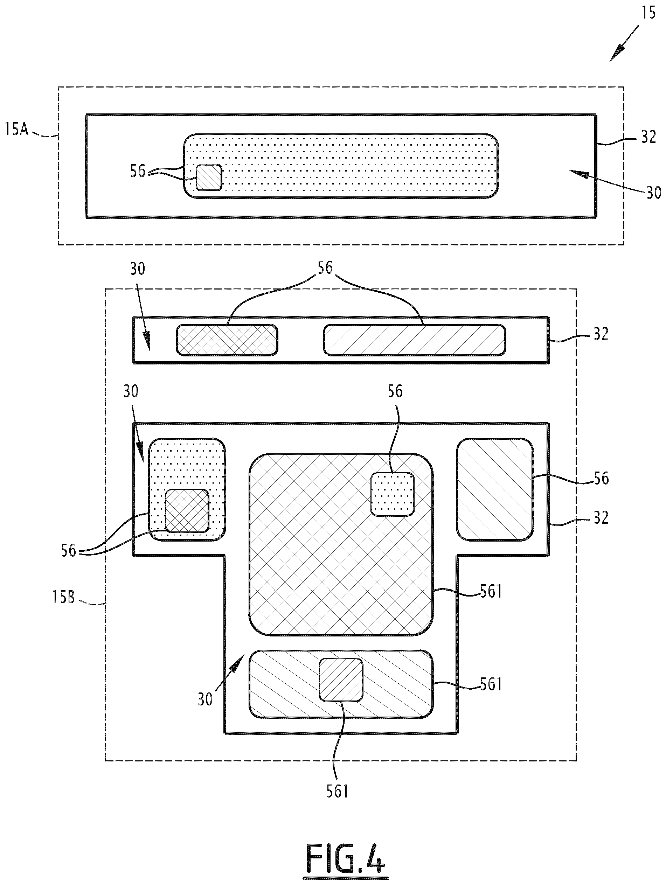

La figure 4 représente un exemple de distribution d'affichage de flux distribué issus de flux calculés, réalisé par le module d'arrangement 25. En particulier, la figure 4 représente le même ensemble d'afficheur(s) que celui représenté sur la figure 2. Les bords contigus 40 des dalles 30 ne sont pas représentés sur la figure 4 pour des soucis de lisibilité.

Sur la figure 4, les calques d'IHS 56 des flux distribués sont représentés par des rectangles dont les angles sont arrondis.

Dans l'exemple illustré sur la figure 4, le système électronique d'affichage comprend trois calculateurs graphiques 20. Chaque calculateur graphique 20 calcule des flux calculés qui lui sont propres. Un premier calculateur graphique 20 calcule les flux vidéo correspondant à des calques d'IHS 56 dont le remplissage est en pointillé sur la figure 4. Un deuxième calculateur graphique 20 calcule un flux de commandes graphiques correspondant à des calques d'IHS 56 dont le remplissage est hachuré du bas à gauche vers le haut à droite sur la figure 4. Un troisième calculateur graphique 20 calcule des flux vidéo correspondant à des calques d'IHS 56 dont le remplissage est hachuré du bas à droite vers le haut à gauche sur la figure 4. Enfin, un quatrième calculateur graphique 20 calcule des flux de commandes aéronautiques correspondant à des calques d'IHS 56 dont le remplissage est hachuré en croisillons sur la figure 4.

Il est visible sur la figure 4 que les calques d'IHS 56 issus des flux calculés par un même calculateur graphique 20 sont par exemple affichés sur plusieurs afficheurs 15A, 15B.

En outre, comme visible sur la figure 4, les calques d'IHS 56 issus des flux calculés provenant du deuxième et du quatrième calculateurs graphiques 20 sont affichés sur plusieurs dalles 30. Ces calques d'IHS portent la référence 561 sur la figure 4.

Ainsi, il est clair que le module d'arrangement 25 considère l'ensemble des dalles 30 d'un même afficheur 15 comme une unique surface d'affichage 32 sans préjuger des limites des dalles 30.

De nouveau en référence à la figure 3, l'ensemble de capteurs 26 est configuré pour acquérir une instruction depuis un utilisateur du système électronique d'affichage 10. L'utilisateur du système électronique d'affichage 10 est préférentiellement le pilote de l'aéronef. Plus particulièrement, l'ensemble de capteurs 26 est configuré pour acquérir des données résultant d'une instruction de l'utilisateur.

Une instruction de l'utilisateur est par exemple : la sélection d'un calque d'IHS 56 affiché pour obtenir plus d'informations sur le contenu dudit calque, la sélection d'un objet interactif d'un calque pour le changer d'état, saisir de l'information, une instruction d'agrandissement ou de rétrécissement d'un calque d'IHS 56 affiché, une instruction de déplacement d'un calque d'IHS 56 affiché sur l'ensemble d'afficheurs 15, ou une instruction de suppression d'un calque affiché, ou tout autres types d'actions possibles.

L'ensemble de capteurs 26 comprend préférentiellement un capteur tactile, de force ou haptique 261 intégré dans l'ensemble d'afficheurs 15. Par exemple, chaque afficheur 15A, 15B est un afficheur tactile propre à recevoir un appui tactile du l'utilisateur et à fournir des données résultant de cet appui. En particulier, chaque dalle 30 est une dalle tactile.

L'ensemble de capteurs 26 comprend en outre optionnellement un ou plusieurs capteurs multimodaux 262. On entend par « capteurs multimodaux », des capteurs propres à acquérir des instructions de l'utilisateur sans appui. De tels capteurs sont par exemple, des capteurs de suivi de regard de l'utilisateur, des capteurs de voix ou des capteurs de mouvement. Le ou les capteurs multimodaux sont également propres à fournir des données résultant d'une instruction de l'utilisateur.

Le module de décision 27 est connecté à l'ensemble de capteurs 26, à chaque calculateur graphique 20 et au module d'arrangement 25.

Le module de décision 27 est configuré pour fournir au module d'arrangement 25 les règles prédéterminées.

Le module de décision 27 a connaissance de l'architecture du système 10. Ainsi, le module de décision 27 connait la disposition des afficheurs 15 et des dalles 30 ainsi que le nombre de calculateurs 20. En particulier, le module de décision 27 sait si chaque calculateur 20 est un calculateur critique 20C ou non 20NC, préférentiellement par l'information reçue depuis le module d'arrangement 25. Le module de décision 27 est configuré pour élaborer les règles prédéfinies et les transmettre, au module d'arrangement 25.

Le module de décision 27 est configuré pour recevoir, depuis l'ensemble de capteurs 26, les données résultant de l'instruction de l'utilisateur. Le module de décision 27 est en outre configuré pour identifier, à partir des données acquises, l'instruction de l'utilisateur, et pour envoyer, selon l'instruction identifiée, une consigne prédéfinie à au moins l'un parmi : au moins un des calculateurs graphiques 20, et le module d'arrangement 25. La consigne prédéfinie dépend de l'instructions identifiée.

En particulier, le module de décision 27 est configuré pour identifier en fonction des données reçues, le calque d'IHS 56 concerné par l'instruction de l'utilisateur. Le module de décision 27 est configuré pour ensuite identifier l'instruction, par exemple parmi les exemples d'instructions susmentionnés.

Le module de décision 27 est configuré pour, en fonction du calque d'IHS 56 identifié et de l'instruction identifiée, déterminer, si l'instruction est traitable par le module d'arrangement 25, par exemple via une modification des règles prédéfinies par le module décision 27. Dans ce cas, le module de décision 27 est configuré pour transmettre l'instruction au module d'arrangement 25 pour mettre en oeuvre une action corrective sur la distribution des calques d'IHS 56 sur l'ensemble d'afficheur(s) 15 lors de la formation des flux distribués, par exemple en mettant à jour les règles prédéterminées. Ceci est notamment le cas lorsque l'instruction est une instruction d'agrandissement ou de rétrécissement d'un calque d'IHS 56 affiché, une instruction de déplacement d'un calque d'IHS 56 affiché sur l'ensemble d'afficheur(s) 15, ou une instruction de suppression d'un calque d'IHS 56 affiché.

Lorsque l'instruction n'est pas traitable par le module d'arrangement 25, le module de décision 27 est configuré pour transmettre l'instruction au calculateur graphique 20 ayant calculé le flux calculé correspondant au calque d'IHS 56 identifié, pour que le calculateur graphique 20 mette en oeuvre l'action corrective appropriée. En particulier, le calculateur graphique 20 correspondant est configuré pour recevoir l'instruction et le calque d'IHS 56 identifiés via son unité de traitement 45 précédemment décrite.

Optionnellement, le système 10 comprend en outre un module de surveillance 28 configuré pour surveiller que les actions du module d'arrangement 25 sont bien exécutées.

Le module de surveillance 28 est par exemple configuré pour surveiller qu'aucune latence additionnelle n'est ajoutée dans le traitement des flux calculés. Par exemple, le module de surveillance 28 vérifie la fréquence de réception des flux par les unités de génération 60 et le temps de traversée du module d'arrangement 25.

Le module de surveillance 28 est par exemple en outre configurer pour surveiller que l'extraction des calques d'IHS 56 est correcte. A cet effet, pour les calques d'IHS 56 issues de flux calculés comprenant des commandes graphiques ou aéronautiques, le module de surveillance 28 est par exemple configuré pour surveiller que les pixels générés dans les calques d'IHS 56 sont conformes au flux calculés.

Préférentiellement, le module de surveillance 28 est configuré pour, s'il détecte un dysfonctionnement dans les fonctions précédemment cités qu'il surveille, commander une action parmi les actions suivantes :
- affichage d'un message d'avertissement sur l'un des afficheurs 15 à destination du pilote,
- reconfiguration de la distribution des calques d'IHS 56 dans les flux distribués, et
- inhibition du flux calculé par un des calculateurs 20.

En particulier, pour commander l'affichage du message d'avertissement, le module de surveillance 28 est préférentiellement configuré pour envoyer une telle commande, au module de décision 27 qui est configuré pour alors transmettre cette commande à un calculateur 20, préférentiellement un calculateur critique 20C, plus préférentiellement le calculateur critique 20C concerné par le dysfonctionnement détecté. En variante non-représentée, le modèle de surveillance 28 est configuré pour envoyer directement ladite commande audit calculateur 20.

Pour commander la reconfiguration de la distribution des calques d'IHS 56, le module surveillance 28 est préférentiellement configuré pour communiquer le dysfonctionnement détecté, au module de décision 27 pour qu'il adapte les règles prédéfinies.

Pour commander l'inhibition du flux calculé par un des calculateurs 20, le module de surveillance 28 est préférentiellement configuré pour envoyer une telle commande, au module de décision 27 qui est alors configuré pour transmettre cette commande à un calculateur 20 pour qu'il inhibe la sortie de son flux calculé.

En outre, le module de surveillance 28 est par exemple configuré pour surveiller le mélange des calques d'IHS 56 par l'unité de fusion et distribution 25 et la position d'affichage de chaque calque d'IHS 56. A cet effet, par exemple, le module de surveillance 28 est configuré pour ajouter des pixels dans les calques d'IHS 56, sous la forme d'un motif, et pour vérifier que le motif évolue au cours du temps sur les afficheurs. Préférentiellement, le module de surveillance 28 est configuré pour effectuer une somme polynomiale du motif, par exemple à partir d'une fonction de hash ou CRC, et pour vérifier que cette signature sur les afficheurs.

Comme représenté sur la figure 3, le module d'arrangement 25 est également optionnellement connecté à un capteur externe (non-représenté) fournissant un flux vidéo externe respectif 74, tel qu'une caméra. Le module d'arrangement 25 est alors configuré pour traiter ce flux externe respectif 74 comme s'il était issu d'un calculateur non-critique 20NC ou d'un calculateur critique 20C.

Par exemple, chaque calculateur graphique 20, le module d'arrangement 25 et le module de décision 27 sont des calculateurs comprenant respectivement une mémoire, au moins un processeur de calcul, au moins un processeur graphique, au moins un processeur vidéo. Les fonctionnalités de ces modules 25, 27 et calculateurs graphiques 20 sont alors réalisées sous forme d'un logiciel, ou d'une brique logicielle, exécutable par le processeur associé. En particulier, chaque unité de traitement 45, unité graphique 50, unité vidéo 55, unité de génération 60 et unité de fusion et distribution 65 est un logiciel ou, brique logicielle.

Chaque mémoire est alors apte à stocker un tel logiciel. Chaque processeur est alors apte à exécuter chacun des logiciels.

En variante non représentée, chaque calculateur graphique 20, le module d'arrangement 25 et le module de décision 27, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit).*

Lorsque chaque calculateur graphique 20, module d'arrangement 25 et module de décision 27 est un calculateur implémentant des fonctionnalités logicielles, c'est-à-dire des programmes d'ordinateur, également appelés produits programmes d'ordinateur, lesdits programmes d'ordinateur sont en outre aptes à être enregistrés sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

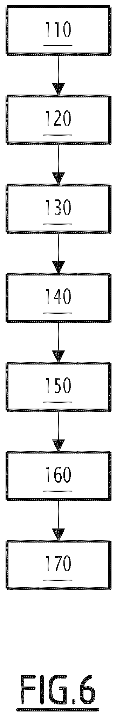

Le fonctionnement du système électronique d'affichage 10 va maintenant être décrit, via un procédé d'affichage, mis en oeuvre par le module d'arrangement 25 et dont un organigramme est représenté sur la figure 6.

Initialement, chaque calculateur graphique 20 calcule un ou plusieurs flux calculés, par exemple à partir de contenu(s) vidéo, et/ou informations à afficher, reçus depuis l'équipement externe et/ou calculés par le calculateur graphique 20 lui-même. Initialement également, le module d'arrangement 25 a par exemple envoyé l'information sur la criticité des calculateurs, au module de décision 27 qui détermine alors les règles prédéterminées.

Alternativement, l'information de criticité est connue par le module de décision 27 de manière car prédéfinie par un opérateur réalisé les configurations du cockpit considéré.

Les flux calculés sont ensuite envoyés au module d'arrangement 25.

Le procédé d'affichage comprend une étape de réception 110, lors de laquelle le module d'arrangement 25 reçoit depuis chaque calculateur graphique 20, au moins un flux calculé.

Le procédé comprend ensuite une étape de génération 120, lors de laquelle le module d'arrangement 25 génère, via ses unités de génération 60 et pour chaque flux calculé reçu, au moins un calque d'IHS 56.

Le procédé comprend ensuite une étape formation 130, lors de laquelle le module d'arrangement 25 forme pour chaque pour chaque afficheur 15A, 15B, ou pour chaque surface d'affichage 32, un flux vidéo distribué à partir des calques d'IHS 56.

A cet effet, le module d'arrangement 25 détermine, via son unité de fusion et distribution 65, une distribution des calques d'IHS 56 en formant les flux distribués comme expliqué précédemment, préférentiellement en appliquant les règles prédéfinies par le module de décision 27.Le procédé comprend ensuite une étape d'envoi 140 lors de laquelle le module d'arrangement 25 envoie, par exemple via son unité de fusion et distribution 65, à l'ensemble d'afficheur(s) 15, les flux vidéo distribués comprenant les calques d'interface Homme-Système (56) en vue de leur affichage sur chaque afficheur 15A, 15B ou chaque surface d'affichage 32.

Chaque afficheur 15A, 15B reçoit le flux vidéo distribué correspondant et répartit l'affichage du flux distribué sur sa dalle 30 ou entre ses dalles 30.

Puis, à un instant, le pilote émet optionnellement l'instruction de modification de l'affichage.

Cette instruction est par exemple un appui tactile sur l'un de l'ensemble d'afficheur(s) 15, une instruction vocale, une instruction oculaire ou une instruction de mouvement.

L'ensemble de capteurs 26 acquiert alors des données correspondant à l'instruction émise par le pilote.

L'ensemble de capteurs 26 transmet ces données au module de décision 27. Le module de décision 27 identifie alors l'instruction émise par le pilote et le calque d'IHS 56 concerné.

Le module de décision 27 détermine alors si l'instruction est traitable par le module d'arrangement 25.

Si oui, le module de décision 27 transmet l'instruction au module d'arrangement 25, par exemple en établissant de nouvelles règles prédéfinies et en les transmettant au module d'arrangement 25.

Le procédé comprend alors une nouvelle étape de réception 150, lors de laquelle le module d'arrangement 25 reçoit l'instruction de modification de l'affichage d'un flux vidéo distribué, émise depuis un utilisateur du système d'affichage 10, par exemple le pilote.

Le procédé comprend alors une étape 160 de formation d'un nouveau flux vidéo distribué à la place du flux vidéo distribué ciblé par l'instruction, en fonction de l'instruction reçue.

A cet effet, le module d'arrangement 25 forme le nouveau flux distribué en adaptant par exemple alors la distribution des calques d'IHS 56 sur l'ensemble d'afficheurs 15, en fonction de l'instruction reçue.

En particulier, si l'instruction est une instruction de déplacement d'un calque d'IHS 56, le module d'arrangement 25 réorganise la distribution spatiale des calques d'IHS 56 sur l'ensemble d'afficheur(s) 15.

Si l'instruction est une instruction d'agrandissement ou de rétrécissement de l'affichage d'un calque d'IHS 56, le module d'arrangement 25 effectue la modification de la taille l'affichage dudit calque d'IHS 56 sur l'ensemble d'afficheurs 15. Si cette modification de taille implique une superposition partielle dudit calque d'IHS 56 avec un autre calque d'IHS 56, le module d'arrangement 25 réorganise optionnellement la distribution des autres calque d'IHS 56 sur l'ensemble d'afficheur(s) 15 en conséquence.

Si l'instruction est une instruction de suppression de calque d'IHS 56 affiché, le module d'arrangement 25 supprime alors ce calque d'IHS 56 de l'affichage des calques d'IHS 56. Optionnellement, le module d'arrangement 25 réorganise l'affichage des calque d'IHS 56 sur l'ensemble d'afficheurs 15 pour mieux occuper l'espace d'affichage sur l'ensemble d'afficheur(s) 15.

Le procédé comprend alors une nouvelle étape d'envoie 170, lors de laquelle le module d'arrangement 25 envoie à l'afficheur 15A, 15B correspondant, le nouveau flux vidéo distribué en vue de son affichage sur l'afficheur 15A, 15B ou la surface d'affichage correspondante 32.

Si le module de décision 27 détermine que l'instruction n'est pas traitable par le module d'arrangement 25, il la transmet au calculateur graphique 20 ayant calculé le flux calculé dont est issu le calque d'IHS 56 identifié.

Le calculateur graphique concerné 20 modifie alors le flux calculé correspondant. Par exemple si l'instruction est une demande de compléments sur une information comprise dans un des calques d'IHS 56 ou la sélection d'un objet interactif d'un calque d'IHS pour le changer d'état, le calculateur graphique 20 communique par exemple avec le système externe pour obtenir ces compléments ou le résultat de ce changement d'état. Le calculateur graphique 20 calcule alors un nouveau flux calculé calque d'IHS 56 comprenant les informations complétées ou dont l'état à changer et le transmet au module d'arrangement 25. Le module d'arrangement 25 génère alors un nouveau calque d'IHS 56 et l'inclut dans sa distribution de calques d'IHS 56 sur l'ensemble d'afficheur(s) 15 lors de la formation de nouveaux flux distribués.

Si l'instruction est la saisie de l'information, le calculateur graphique 20 communique par exemple avec le système externe pour qu'il traite l'information saisie et adapte le contenu à afficher qu'il transmet au calculateur graphique 20. Similairement à précédemment, le calculateur graphique 20 calcule un nouveau flux calculé et le module d'arrangement 25 génère un nouveau calque d'IHS 56 et l'inclue dans les flux distribués lors de la formation desdits nouveaux flux.

Préférentiellement, le procédé comprend en parallèle de ces étapes, une phase de surveillance, non-représentée, lors de laquelle le module de surveillance 28 surveille tout ou partie de l'exécution des étapes, et en particulier les actions du module d'arrangement 25, pour vérifier qu'elles sont bien exécutées.

Si à un instant, lors de la phase de surveillance, le module de surveillance 28 détecte un dysfonctionnement tel que décrit précédemment, le module de surveillance 28 commande une action parmi les actions suivantes :
- affichage d'un message d'avertissement sur l'un des afficheurs 15 à destination du pilote,
- reconfiguration de la distribution des calques d'IHS 56 dans les flux distribués, et
- inhibition du flux calculé par un des calculateurs 20,
préférentiellement tel que décrit précédemment.

Il est clair que le système électronique d'affichage 10 selon l'invention permet une plus grande flexibilité pour le pilote de l'aéronef, notamment grâce au module d'arrangement 25 permettant de ne plus faire correspondre les calques d'IHS 56 issus de flux calculés par les calculateurs graphiques 20 à un afficheur 15A, 15B, ou à une dalle d'affichage 30.

Ainsi, il est possible qu'un calque d'IHS 56 soit partiellement affiché sur plusieurs dalles 30. En cela, le système électronique d'affichage 10 selon l'invention s'abroge des limites de l'ensemble d'afficheurs 15 en considérant l'ensemble d'afficheurs comme une unique zone d'affichage non-ségrégués en plusieurs afficheurs distincts et indépendants.

En outre, grâce au module d'arrangement 25, il est possible de conserver les calculateurs graphiques 20 de l'état de la technique puisque que le module d'arrangement 25 est compatible avec ces calculateurs graphiques 20.

De plus, le fait que l'afficheur 15B comprenant plusieurs dalles 30 contigües permet au module d'arrangement 25 de former des flux vidéo distribués comprenant des calques d'IHS 56 s'étendant sur tout ou partie de la surface d'affichage, et de reconfigurer la distribution des calques d'IHS 56 dans les flux distribués tout en étant agnostique de la répartition des dalles 30.

En outre, le module d'arrangement 25 permet d'éviter d'intégrer une unité de gestion de l'affichage des calques d'IHS 56 dans chaque calculateur graphique 20, simplifiant ainsi chaque calculateur graphique 20.

De plus, le module d'arrangement 25 permet de mixer des informations de criticités différentes issues de différents calculateurs 20 tout en conservant les propriétés de ségrégation spatiale et temporelle. Ainsi, le module d'arrangement 25 permet d'assurer qu'un flux issu d'un calculateur non-critique 20NC n'impacte pas un flux issu de d'un calculateur critique 20C. Le module d'arrangement 25 est conçu pour implémenter un partitionnement robuste entre les différents flux d'informations reçus depuis les calculateurs 20 et le module de contrôle 27.

Le fait que l'instruction identifiée soit transmise, par le module de décision 27, directement au module d'arrangement 25 lorsque cela est possible, permet d'accélérer le traitement de l'instruction en contournant les calculateurs graphiques 20. Ainsi, l'interaction entre un l'utilisateur et le système 10 est plus fluide.

Le module d'arrangement 25 garantie l'ouverture et la robustesse du système 10 vis-à-vis des calculateurs graphiques 20 en découplant les calculateurs graphiques 20 et l'ensemble d'afficheurs 15 au niveau des interfaces vidéos et des interfaces de transmission des instructions émises pour l'ensemble d'afficheur(s) 15 vers les calculateurs graphiques 20.

Le module d'arrangement 25 permet d'optimiser le câblage dans le système électronique d'affichage 10 avec des connexions directes et uniques entre les calculateurs graphiques 20 et le module d'arrangement 25, et entre le module d'arrangement 25 et l'ensemble d'afficheurs 15.

Le module d'arrangement 25 garantit l'ouverture et la robustesse du système 10 vis-à-vis des calculateurs graphiques 20 qu'il comprend en assurant les propriétés de ségrégation entre les flux vidéo issus de calculateurs graphiques 20 éventuellement hétérogènes, et entre les calques d'IHS 56 qui composent les flux vidéo.

## Revendications

1. Procédé d'affichage pour un système électronique d'affichage (10) destiné à être intégré dans un cockpit (9) d'un aéronef, le procédé étant mis en oeuvre par un module d'arrangement (25) propre à être connecté à un ensemble de calculateurs graphiques (20) et à un ensemble d'afficheurs (15), chaque afficheur (15) définissant au moins une surface d'affichage (32) ;
le procédé comprenant les étapes suivantes :
- réception (110), depuis chaque calculateur graphique (20), d'au moins un flux calculé,
- génération (120), pour chaque flux calculé reçu, d'au moins un calque d'interface Homme-Système (56),
- pour chaque afficheur (15A, 15B) ou pour chaque surface d'affichage (32), formation (130) d'un flux vidéo distribué à partir des calques d'interface Homme-Système (56),
- envoi (140), à l'ensemble d'afficheurs (15), des flux vidéo distribués comprenant les calques d'interface Homme-Système (56), en vue de leur affichage sur chaque afficheur (15A, 15B) ou chaque surface d'affichage (32).

2. Procédé selon la revendication 1, dans lequel, lors de l'étape de formation (130), au moins un flux vidéo distribué comprend des calques d'interface Homme-Système (56) générés à partir de flux calculés issus de plusieurs calculateurs graphiques (20) distincts.

3. Procédé selon la revendication 1 ou 2, dans lequel, lors de l'étape de formation (130), au moins deux flux vidéo distribués distincts sont formés en divisant un calque d'interface Homme-Système (56) géométriquement, chacun desdits deux flux vidéo distribués comprenant une portion du calque d'interface Homme-Système (56) issue de la division.

4. Procédé selon l'une quelconque des revendications précédentes, comprenant en outre, les étapes suivantes :
- réception (150) d'une instruction de modification de l'affichage d'un flux vidéo distribué, émise depuis un utilisateur du système d'affichage (10),
- formation (160) d'un nouveau flux vidéo distribué à la place du flux vidéo distribué ciblé par l'instruction, en fonction de l'instruction reçue, et
- envoi (170), à l'afficheur (15A, 15B) correspondant, ou à la surface d'affichage (32) correspondante du nouveau flux vidéo distribué en vue de son affichage sur l'afficheur (15A, 15B) ou la surface d'affichage (32).

5. Procédé selon la revendication 4, dans lequel l'instruction de modification est choisie parmi :
- une instruction de déplacement d'un calque d'interface Homme-Système (56) dans un flux vidéo distribué,
- une instruction d'agrandissement ou de rétrécissement de l'affichage d'un calque d'interface Homme-Système (56) dans un flux vidéo, et
- une instruction de suppression de calque d'interface Homme Système (56) dans un flux vidéo distribué.

6. Procédé selon l'une quelconque des revendications précédentes, dans lequel lors de l'étape de génération (120), à chaque calque d'interface Homme-Système (56) est associé au moins un attribut indiquant le calculateur graphique (20) d'où est issu le flux calculé à partir duquel le calque d'interface Homme-Système (56) est généré, lors de l'étape de formation (130), chaque flux vidéo distribué est formé en fonction de règles prédéterminées dépendant du calculateur graphique (20) indiqué dans chaque attribut de chaque calque d'interface Homme-Système (56).

7. Procédé selon la revendication 6, dans lequel l'ensemble de calculateurs (20) comprend des calculateurs critiques (20C) et des calculateurs non-critiques (20NC), les règles prédéterminées étant fonction de la criticité des calculateurs (20C, 20NC).

8. Procédé selon l'une quelconque des revendications précédentes, dans lequel le procédé comprend en parallèle de ces étapes (110, 120, 130, 140), une phase de surveillance, au cours de laquelle l'exécution de chaque étape est surveillée par un module de surveillance (28),
en cas de détection d'un dysfonctionnement par le module de surveillance (28), le module de surveillance commandant au moins une action parmi les actions suivantes:
- affichage d'un message d'avertissement sur l'un des afficheurs (15),
- reconfiguration d'une distribution des calques d'interface Homme-Système (56) dans les flux distribués, et
- inhibition du flux calculé par un des calculateurs (20).

9. Produit programme d'ordinateur comprenant des instructions logicielles qui, lorsqu'elles sont exécutées par une ordinateur, mettent en oeuvre un procédé selon l'une quelconque des revendications.

10. Module d'arrangement pour un système électronique d'affichage (10) destiné à être intégré dans un cockpit (9) d'un aéronef,
le module d'arrangement (25) étant propre à être connecté à un ensemble de calculateurs graphiques (20) et à un ensemble d'afficheurs (15), chaque afficheur (15) définissant au moins une surface d'affichage (32) ;
le module d'arrangement (25) comprenant au moins une unité de génération (60) configuré pour recevoir depuis, chaque calculateur graphique (20), un flux calculé et pour générer au moins un calque d'interface Homme-Système (56) à partir de ce flux calculé,
le module d'arrangement (25) comprenant en outre une unité de fusion et distribution (65) configurée pour former, pour chaque afficheur (15A, 15B) ou pour chaque surface d'affichage (32), un flux vidéo distribué à partir des calques d'interface Homme-Système (56),
l'unité de fusion-distribution (65) étant en outre configuré pour envoyer, à l'ensemble d'afficheurs (15), les flux vidéo distribués formés en vue de leur affichage sur chaque afficheur (15A, 15B) ou chaque surface d'affichage (32).
